(19) Europäisches Patentamt
European Patent Office
Office européen des brevets

(11) **EP 2 731 219 A1**

(12) **EUROPEAN PATENT APPLICATION**
published in accordance with Art. 153(4) EPC

(43) Date of publication:
**14.05.2014 Bulletin 2014/20**

(51) Int Cl.:
***H02J 3/00*** (2006.01)

(21) Application number: **12807345.9**

(22) Date of filing: **04.07.2012**

(86) International application number:
**PCT/JP2012/004325**

(87) International publication number:
**WO 2013/005426 (10.01.2013 Gazette 2013/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.07.2011 JP 2011148908**

(71) Applicant: **Panasonic Corporation
Osaka 571-8501 (JP)**

(72) Inventors:
• **KOUDA, Tetsuya
Osaka 540-6207 (JP)**
• **IKEDA, Tosihisa
Osaka 540-6207 (JP)**
• **YOSHIMURA, Yasuo
Osaka 540-6207 (JP)**
• **TAKAYAMA, Hisashi
Osaka 540-6207 (JP)**
• **WAKI, Yuki
Osaka 540-6207 (JP)**

(74) Representative: **Schwabe - Sandmair - Marx
Patentanwälte
Stuntzstraße 16
81677 München (DE)**

(54) **HOME ELECTRIC APPLIANCE**

(57)    A home electric appliance of the present invention includes an input operation unit for inputting desired time information indicating any of a desired operation start time and a desired operation end time; a receiving unit for receiving a time shift calculation result including any of an operation start time and an operation end time and an electricity charge of which an amount becomes not more than a predetermined value when the appliance is operated according to the operation start time or the operation end time within a predetermined period determined by the desired time information; a storage unit for storing a reference value with which the time shift calculation result is evaluated; a comparison evaluation unit for carrying out comparison processing which compares the time shift calculation result with the reference value stored in the storage unit; an operation control unit for controlling operation of the appliance based on the time shift calculation result; and a display unit for displaying information regarding the operation. The display unit changes a display method according to a comparison result by the comparison evaluation unit.

FIG. 2

EP 2 731 219 A1

**Description**

TECHNICAL FIELD

The present invention relates to a home electric appliance in which any of an operation start time and an operation end time is controlled.

BACKGROUND ART

Conventionally, there has been proposed an electric load leveling system which presents a time zone in a day during which a load of a power supply device of a power company is low to each customer for promoting use of electric power during the time zone (see, for example, Patent Literature 1).

The above-mentioned electric load leveling system can increase bottom electric power by presenting a time zone (recommended electricity use hours) in a day during which a load of the power supply device is low to each customer for promoting use of electric power during this time zone. Accordingly, reduction of peak electric power of electric power demand can be expected, so that the load of the power supply device can be leveled as a whole.

Furthermore, when the load of the power supply device is leveled, the power company can reduce cost for controlling an electricity generation amount of the power supply device according to the electric power demand. Therefore, when an electricity rate during the hours is reduced in addition to presenting the recommended electricity use hours, it can be expected that each customer as a user of electric power intends to use inexpensive electric power during the hours. As a result, the electric power demand can be leveled further efficiently.

As an example, for household, electric water heaters and heat pump hot-water supply devices for boiling water by using late-night electric power contract or time-of-a-day electric light contract have already been popularized. Hot water boiled by using electric power of a time zone late at night (for example, from 11:00 pm to 7:00 am) the day before in which the electricity rate is low is stored in a hot water storage tank, and the stored hot water is used in eating, taking shower, and taking a bath in the daytime or in the morning or at night. Thus, the electric power demand for boiling hot water is shifted to the time zone late at night the day before.

In general, the electric water heaters and heat pump hot-water supply devices produce hot water to be stored in a hot water storage tank at night in which the electric power demand is small, and the hot water is used in the daytime. Thus, since the operation of devices is shifted to night time in which electric power demand is smaller than in the daytime, the electric power demand can be leveled. Furthermore, for users, there is a merit that an electricity charge can be reduced by using electric power at night in which an electric power rate is low.

Such electric water heaters and heat pump hot-water supply devices corresponding to late-night electric power includes time-measuring means therein, and starts a boiling operation at a time which is previously determined by the contract with the power company. In other words, such devices carry out a reserved operation at a preset operation start time (or an operation end time) every day in advance.

In the future, it is thought that natural energy generating systems such as photovoltaic power generators and wind power generators are popularized. In such natural energy generating systems, however, it is predicted that electricity generation amounts are largely changed depending upon weather and time.

By the way, in regions in which photovoltaic power generators and wind power generators are popularized, some countries employ real-time pricing system. In the case of the late-night electric power contract, the electricity rate is lower in a predetermined time zone, that is, from 11:00 pm to 7:00 am, every day. On the other hand, in the real-time pricing, an electric power rate changes in real time according to the electricity generation amounts, or the like, of the photovoltaic power generators and the wind power generators. Therefore, the electricity rate changes depending upon days even in the same time zone.

In such circumstance, technologies for controlling electric power demands are becoming more important. Not only conventional systems for leveling electric power demands and controlling electricity generation amounts according to the electric power demands, but also new systems for controlling the electric power demands according to changing electricity generation amounts are necessary.

For example, the power company changes electricity rates according to changing electricity generation amounts. When the electricity generation amount is large, the power company lowers the electricity rate, and when the electricity generation amount is small, the power company raises the electricity rate. In such a manner, the power company can control the electric power demands according to the changing electricity generation amounts.

Then, a home appliance control system for controlling a home electric appliance via a home server has been proposed (see, for example, Patent Literature 2). The control system includes a home server for comparing a plurality of operation conditions of home electric appliances and stored conditions in advance with each other, and calculating ideal operation patterns for controlling the home electric appliances, and a home electric appliance which is operated based on the ideal operation patterns by control of the home server.

Then, it stores an electricity rate menu as an ideal operation pattern provided from the power company (electric power supplier) in the home server so that the home electric appliance is operated in the time zone in which the electricity rate is low. The home server compares the electricity rate menu with the input operation conditions in advance, carries out calculation so as to allow a washing/drying machine, a rice cooker, and a pot to be operated in the time zone in which the electricity rate is low.

At this time, Patent Literature 2 discloses a configuration in which a user operates an input operation panel so as to input desired use time of the above-mentioned home electric appliance into the home server. Then, in the configuration, a home server side connected to the home electric appliance creates an optimum time zone plan in consideration of a use time desired by the user and the characteristics of the home electric appliance, and controls the home electric appliance according to the plan.

However, in the above-mentioned conventional technologies, there is description of an algorithm for shifting working time of the home electric appliance to the optimum time zone in consideration of the electricity rate, or the like, but sufficient investigation has not been made on how to use a time-shift function of the home electric appliance.

Generally, it is thought that user's satisfaction and a low electricity rate have a tradeoff relation. For example, when a user operates a home electric appliance in the time zone in which an electricity rate is low, the user tends to have dissatisfaction that the home electric appliance cannot be operated in desired time, and has higher dissatisfaction with finishing results that laundry clothes tend to have creases because drying of laundry clothes is carried out earlier than an appropriate time zone. On the contrary, when priority is put on operating of a home electric appliance in the desired time or on drying in the time zone in which laundry clothes do not have creases, the electricity rate may become higher than usual.

Actually, users consider a tradeoff between satisfaction and low electricity rate, and find a compromise therebetween. They intend to obtain satisfaction to some extent while they sacrifice the electricity rate to some extent.

### Citation List

### Patent Literature

PTL 1: Japanese Patent Unexamined Publication No. 2007-124793
PTL 2: Japanese Patent Unexamined Publication No. 2008-067473

## SUMMARY OF THE INVENTION

A home electric appliance of the present invention includes: an input operation unit for inputting desired time information indicating any of a desired operation start time and a desired operation end time; a receiving unit for receiving a time shift calculation result including any of an operation start time and an operation end time and an electricity charge of which an amount becomes not more than a predetermined value when the appliance is operated according to the operation start time or the operation end time within a predetermined period determined by the desired time information; a storage unit for storing a reference value with which the time shift calculation result is evaluated; a comparison evaluation unit for carrying out comparison processing which compares the time shift calculation result with the reference value stored in the storage unit; an operation control unit for controlling operation of the appliance based on the time shift calculation result; and a display unit for displaying information regarding the operation. The display unit changes a display method according to a comparison result by the comparison evaluation unit.

This configuration permits simple and intuitive operation setting of a home electric appliance, which can achieve user's satisfaction and a low electricity rate.

## BRIEF DESCRIPTION OF DRAWINGS

FIG. 1 is a view for illustrating an outline configuration of an appliance control system in accordance with a first exemplary embodiment of the present invention.
FIG. 2 is a view showing a configuration of the appliance control system in accordance with the first exemplary embodiment of the present invention.
FIG. 3 is a flowchart for illustrating an operation of the appliance control system in accordance with the first exemplary embodiment of the present invention.
FIG. 4 is a schematic view for illustrating a time shift period and an operation period in the first exemplary embodiment of the present invention.

FIG. 5 is a flowchart for illustrating an operation of a home electric appliance in accordance with the first exemplary embodiment of the present invention.

FIG. 6 is a view for illustrating one example of an input operation unit of the home electric appliance in accordance with the first exemplary embodiment of the present invention.

FIG. 7 is a view for illustrating another example of the input operation unit of the home electric appliance in accordance with the first exemplary embodiment of the present invention.

FIG. 8 is a view for illustrating still another example of the input operation unit of the home electric appliance in accordance with the first exemplary embodiment of the present invention.

FIG. 9 is a view for illustrating another display example of a display unit of the home electric appliance in accordance with the first exemplary embodiment of the present invention.

FIG. 10 is a view for illustrating still another display example of the display unit of the home electric appliance in accordance with the first exemplary embodiment of the present invention.

FIG. 11 is a view for illustrating yet another display example of the display unit of the home electric appliance in accordance with the first exemplary embodiment of the present invention.

FIG. 12 is another schematic view for illustrating the time shift period and the operation period in accordance with the first exemplary embodiment of the present invention.

FIG. 13 is still another schematic view for illustrating the time shift period and the operation period in accordance with the first exemplary embodiment of the present invention.

## DESCRIPTION OF EMBODIMENTS

Hereinafter, an exemplary embodiment of the present invention is described with reference to drawings. Note here that the following exemplary embodiment is one example embodying the present invention, and is not intended to limit a technical scope of the present invention.

## (FIRST EXEMPLARY EMBODIMENT)

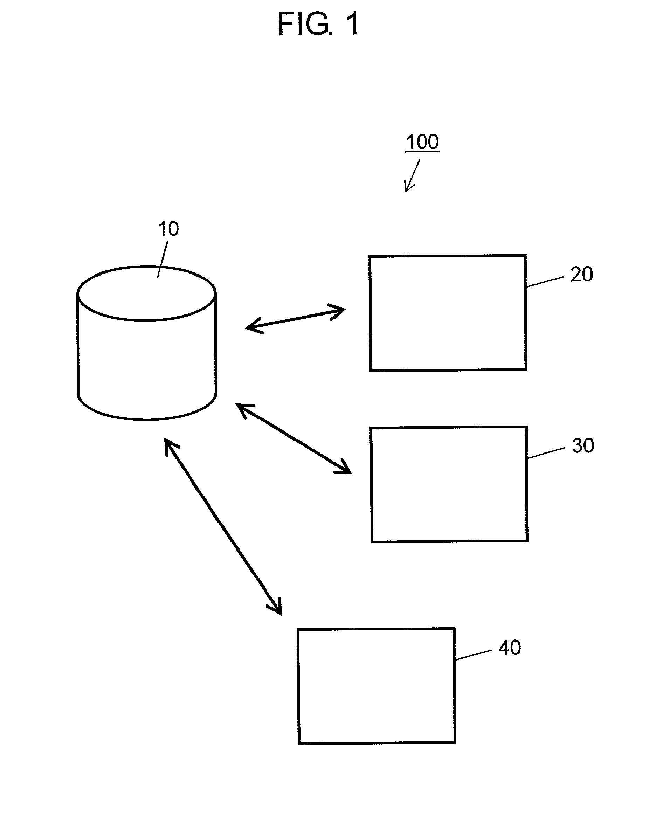

FIG. 1 is a view for illustrating an outline configuration of an appliance control system in accordance with a first exemplary embodiment of the present invention. Appliance control system 100 shown in FIG. 1 includes appliance control device 10 and home electric appliances 20, 30, and 40.

In this exemplary embodiment, a washing/drying machine is described as an example of the home electric appliance, but the home electric appliance of the present invention is not necessarily limited to this, and the present invention can be suitably applied to home electric appliances having timer reservation operation functions for both operation start and operation end. Examples of such home electric appliances include an air-conditioner, a washing machine, a laundry dryer, an electromagnetic cooker (IH), an electric water heater, a dish washer, a rice cooker, a kitchen garbage processor, and the like.

Appliance control device 10 and home electric appliances 20, 30, and 40 are connected to each other via wireless or wired home network such that information can be transmitted and received mutually. In FIG. 1, three home electric appliances are connected to appliance control device 10, but the present invention is not limited to this configuration and at least one home electric appliance may be connected to appliance control device 10.

In this exemplary embodiment, a case where appliance control device 10 and home electric appliances 20, 30, and 40 are disposed in a house is described. However, any of appliance control device 10 and home electric appliances 20, 30, and 40 may be disposed outside. Furthermore, as mentioned below, home electric appliances 20, 30, and 40, which are disposed indoors, are connected in such a manner that they are communicated by wireless or wired communication means, and thereby any of home electric appliances 20, 30, and 40 may have a function of appliance control device 10 described below.

Furthermore, in the following description, a configuration and an operation of home electric appliance (washing/drying machine) 20 are described, but the description of the configuration and the operation may be applied to home electric appliances 30 and 40, and the description thereof is omitted.

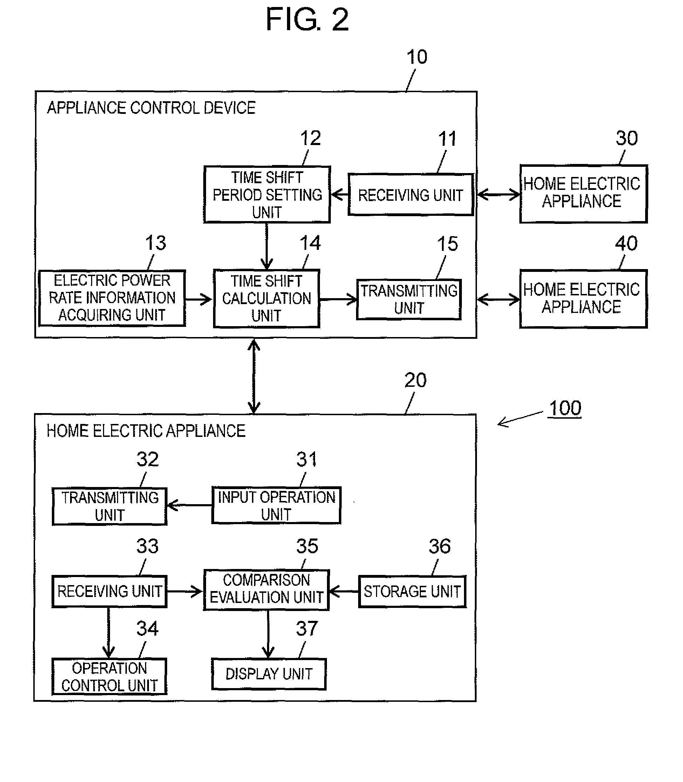

FIG. 2 is a view showing a configuration of the appliance control system in accordance with the first exemplary embodiment of the present invention. Appliance control system 100 shown in FIG. 2 includes appliance control device 10 and home electric appliances 20, 30, and 40.

Home electric appliance 20 includes input operation unit 31, transmitting unit 32, receiving unit 33, operation control unit 34, comparison evaluation unit 35, storage unit 36, and display unit 37. Appliance control device 10 includes receiving unit 11, time shift period setting unit 12, electric power rate information acquiring unit 13, time shift calculation unit 14, and transmitting unit 15.

Input operation unit 31 is an input terminal provided with, for example, an operation screen, and receives an input of information by a user. Input operation unit 31 receives an input of desired time information indicating desired operation end time of home electric appliance 20 desired by a user, operation period information indicating a period required for home electric appliance 20 to be operated, and electric power information indicating electric power required for home electric appliance 20 to be operated. In this exemplary embodiment, input operation unit 31 receives only an input of the desired operation end time of home electric appliance 20 by a user. However, the present invention is not particularly limited to this, and input operation unit 31 may receive only input of the desired operation start time of home electric appliance 20 and may receive input of both the desired operation end time and the desired operation start time of home electric appliance 20. Input operation unit 31 outputs the desired time information, the operation period information, and the electric power information to transmitting unit 32.

Transmitting unit 32 transmits the desired time information indicating the desired operation end time of home electric appliance 20 desired by a user, the operation period information indicating a period required for home electric appliance 20 to be operated, and the electric power information indicating electric power required for home electric appliance 20 to be operated to appliance control device 10. Transmitting unit 32 may transmit desired time information indicating only the desired operation start time to appliance control device 10 instead of transmitting the desired time information indicating only desired operation end time. Furthermore, transmitting unit 32 may transmit desired time information indicating both the desired operation end time and the desired operation start time to appliance control device 10.

Receiving unit 11 of appliance control device 10 receives desired time information indicating the desired operation end time of home electric appliance 20 desired by a user, the operation period information indicating a period required for home electric appliance 20 to be operated, and electric power information indicating electric power required for home electric appliance 20 to be operated. Receiving unit 11 may receive desired time information indicating only the desired operation start time instead of receiving the desired time information indicating only the desired operation end time. Furthermore, receiving unit 11 may receive the desired time information indicating both the desired operation end time and the desired operation start time.

Time shift period setting unit 12 sets a time shift period showing a period having a time range including the desired time information received by receiving unit 11 and in which the operation start time or the operation end time of home electric appliance 20 can be shifted. For example, time shift period setting unit 12 sets a time shift period having a time range of two hours before and after the desired operation end time as a reference.

Electric power rate information acquiring unit 13 acquires electric power rate information indicating an electric power rate that changes per hour. The electric power rate information is provided from, for example, a power company. Electric power rate information acquiring unit 13 acquires electric power rate information of the day and stores it in a memory inside, for example, the day before. The electric power rate information represents change of the electric power rate per 1 kWh for 24 hours. The electric power rate changes according to time, for example, per hour.

For such a change in the electric power rate, real-time pricing, in which an electricity charge changes in real time, is reflected, because supply systems of electricity to households are largely changed when electric power supply sources such as a solar battery, and a fuel cell, and a storage battery are disposed in households having home electric appliances. The real-time pricing generally shows the electric power rate information notified from a power company in advance. Furthermore, the real-time pricing may show not only electric power rate information from the power company, but also operation information of devices such as home electric power supply sources and a storage battery, and electric power rate information formed from historical results of buying electric power rate information and selling electric power rate information. As mentioned above, the electric power rate information may be not only electric power rate information from a power company but also electric power rate information applied to only one household, which is formed from historical results of device operation information, buying electric power rate information and selling electric power rate information in the household. It is essential only that an electric power rate changing depending upon time can be known, and methods for acquiring the information are not particularly limited.

Time shift calculation unit 14 calculates operation start time in which electricity charge, which is charged when home electric appliance 20 is operated within the time shift period set by time shift period setting unit 12, is not more than a predetermined value, and electricity charge at that time, based on the desired time information, the operation period information, and the electric power information received by receiving unit 11, and the electric power rate information acquired by electric power rate information acquiring unit 13. Time shift calculation unit 14 may calculate only the operation end time and may calculate both the operation start time and the operation end time instead of calculating only the operation start time.

Transmitting unit 15 transmits the operation start time calculated by time shift calculation unit 14 to home electric appliance 20. Transmitting unit 15 may transmit only the operation end time and may transmit both the operation start time and the operation end time instead of transmitting only the operation start time.

Receiving unit 33 of home electric appliance 20 receives operation start time transmitted from appliance control device 10. Receiving unit 33 may receive only the operation end time and may receive both the operation start time and the operation end time instead of receiving only the operation start time.

Storage unit 36 stores the operation start time received by receiving unit 33. Storage unit 36 may store only the operation end time and may store both the operation start time and the operation end time instead of storing only the operation start time.

Operation control unit 34 controls the operation of home electric appliance 20 based on the operation start time stored in storage unit 36. That is to say, operation control unit 34 outputs an operation start signal when the current time becomes the operation start time stored in storage unit 36, and controls to start operation of home electric appliance 20.

Note here that when storage unit 36 stores the operation end time, operation control unit 34 determines an operation start time such that the operation ends at the operation end time stored in storage unit 36. Then, when the current time is the determined operation start time, operation control unit 34 outputs an operation start signal and controls to start operation of home electric appliance 20.

Furthermore, comparison evaluation unit 35 of home electric appliance 20 compares a reference value of the electricity charge stored in storage unit 36 with electricity charge acquired via receiving unit 33. The comparison result is display-output by display unit 37.

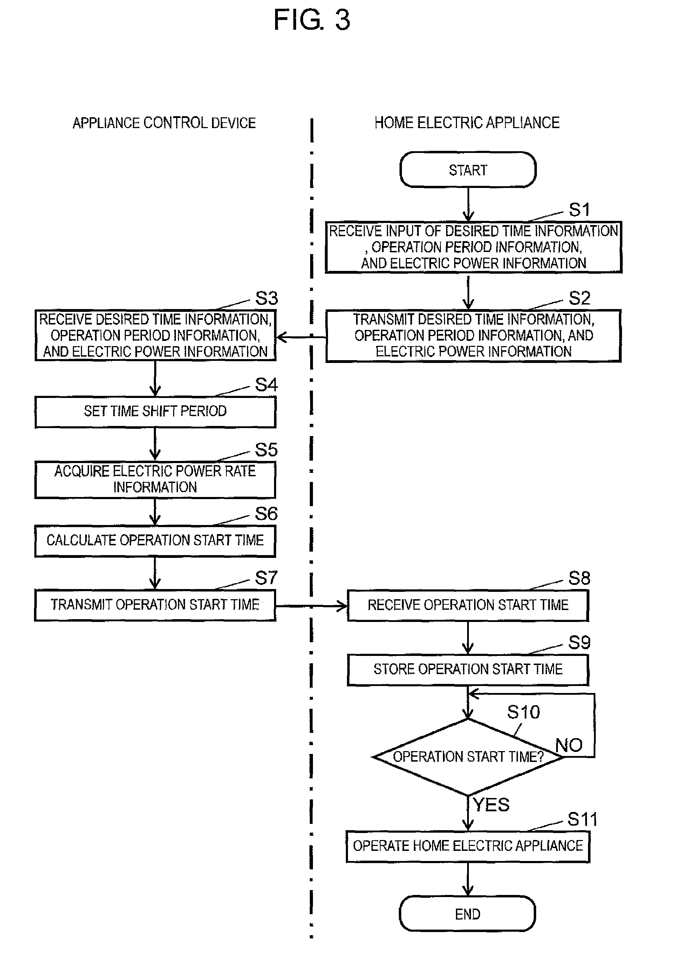

Next, an operation of appliance control system 100 in this exemplary embodiment is described. FIG. 3 is a flowchart for illustrating an operation of an appliance control system in this exemplary embodiment. In FIG. 3, a flow in the right side shows an operation of home electric appliance 20 and a flow in the left side shows an operation of appliance control device 10.

Firstly, in step S1, input operation unit 31 of home electric appliance 20 receives an input of the desired time information indicating desired operation end time of home electric appliance 20 desired by a user, the operation period information indicating a period required for home electric appliance 20 to be operated, and the electric power information indicating electric power required for home electric appliance 20 to be operated. The desired operation end time represents operation end time of home electric appliance 20 desired by a user.

For example, when a user inputs the desired operation end time, the user inputs actual desired operation end time such as "18:00" or a time from the current time to time at which the operation ends, for example, "8 hours later."

Input operation unit 31 outputs the actual desired operation end time to transmitting unit 32. When the time from the current time to the time at which an operation ends is input, input operation unit 31 calculates the desired operation end time and outputs it to transmitting unit 32.

Furthermore, the information input by a user by input operation unit 31 includes the desired operation end time, the operation period information required for home electric appliance 20 to be operated, and the electric power information required for home electric appliance 20 to be operated. However, when input operation unit 31 can receive an input of operation condition by a user and can specify the desired operation end time, the operation period information, and the electric power information based on the received operation condition, a user is not required to input the desired operation end time, the operation period information, and the electric power information.

For example, when home electric appliance 20 is a washing/drying machine, operation period information and electric power information corresponding to the washing course can be specified when a washing course (a standard course, an energy-saving course, a time-saving course, or the like) is selected by input operation unit 31. Therefore, a user is not required to input operation period information and electric power information. In short, when the desired operation end time, the operation period information, and the electric power information can be specified from some input information, a user is not required to input individual information.

Furthermore, home electric appliance 20 may store each information input by input operation unit 31 into an inside memory. Herein, when the information input by input operation unit 31 is information, for example, a washing course, requiring conversion from operation condition, input operation unit 31 may store in advance a conversion corresponding table in which the desired operation end time, operation period information and electric power information corresponding to the washing course are defined.

In particular, when home electric appliance 20 is a washing/drying machine, since a plurality of processes (for example, a washing process, a dewatering process, and a drying process) is carried out sequentially during the operation, the operation period information and the electric power information become complex. Input operation unit 31 may store a plurality of pieces of electric power information for each detection result such as a washing course, weight of laundry, and an outside air temperature.

Next, in step S2, transmitting unit 32 transmits the desired time information, the operation period information, and the electric power information to appliance control device 10.

Next, in step S3, receiving unit 11 of appliance control device 10 receives the desired time information, the operation period information, and the electric power information transmitted by transmitting unit 32. Receiving unit 11 outputs the received desired time information, operation period information, and electric power information to time shift period setting unit 12.

Next, in step S4, time shift period setting unit 12 sets a time shift period having a time range including the desired time information received by receiving unit 11. For example, time shift period setting unit 12 sets a time shift period having a time range of two hours before and after the desired operation end time as a reference. The time range of the time shift period is previously determined, and the time shift period stored in a memory inside of appliance control device 10 is read out by time shift period setting unit 12.

In this exemplary embodiment, the time shift period has a time range of two hours before and after the desired operation end time, but the present invention is not particularly limited to this. An optimum time range may be set according to types of home electric appliances 20. For example, it is preferable that the time shift period is about two to four times as time required for home electric appliance 20 to be operated.

Next, in step S5, electric power rate information acquiring unit 13 acquires electric power rate information indicating an electric power rate that changes per hour. Electric power rate information acquiring unit 13 reads out electric power rate information previously stored in the memory inside, but the present invention is not particularly limited to this. Electric power rate information acquiring unit 13 may access an outside server managed by a power company and acquire electric power rate information from the outside server when the time shift period is set by time shift period setting unit 12.

Next, in step S6, time shift calculation unit 14 calculates operation start time in which electricity charge charged when home electric appliance 20 is operated within the time shift period (predetermined period) set by time shift period setting unit 12 is not more than a predetermined value based on the desired time information, the operation period information, and the electric power information received by receiving unit 11, and the electric power rate information acquired by electric power rate information acquiring unit 13. Thereafter, time shift calculation unit 14 outputs the calculated operation start time to transmitting unit 15.

Next, in step S7, transmitting unit 15 transmits the operation start time calculated by time shift calculation unit 14 to home electric appliance 20.

Next, in step S8, receiving unit 33 of home electric appliance 20 receives the operation start time transmitted by transmitting unit 15 of appliance control device 10. Then, in step S9, receiving unit 33 outputs the received operation start time to storage unit 36, and storage unit 36 stores the operation start time.

Next, in step S10, operation control unit 34 determines whether or not the current time becomes the operation start time stored in storage unit 36. When it is determined that the current time does not become the operation start time stored in storage unit 36 (No in step S10), the operation becomes a standby state, and the determination processing of step S9 is repeated in a predetermined timing until the current time becomes the operation start time stored in storage unit 36. On the other hand, when it is determined that the current time becomes the operation start time stored in storage unit 36 (YES in step S10), in step S11, operation control unit 34 starts the operation of home electric appliance 20. Note here that when the operation condition is input by input operation unit 31, operation control unit 34 operates home electric appliance 20 according to the operation condition.

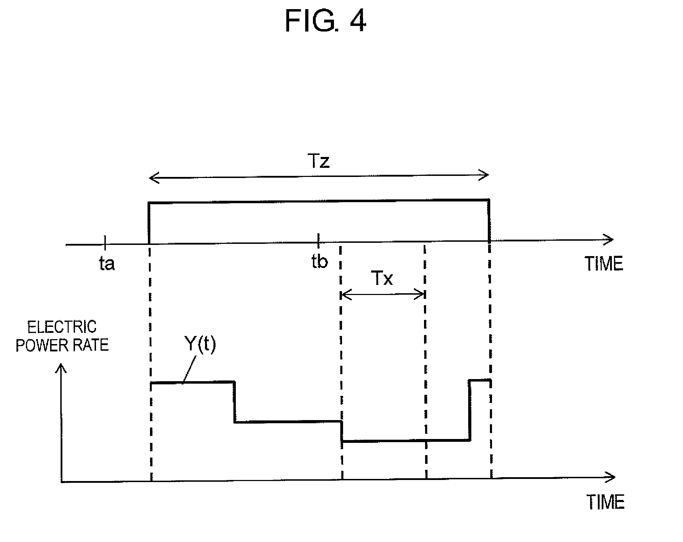

FIG. 4 is a schematic view for illustrating a time shift period and an operation period in the first exemplary embodiment of the present invention. In the upper side of FIG. 4, the abscissa represents time. In the lower side of FIG. 4, the abscissa represents time, and the ordinate represents electric power rate Y(t) (yen/kWh).

At current time ta, when input operation unit 31 receives an input of desired time information indicating desired operation end time tb, time shift period setting unit 12 sets time shift period Tz having a time range of two hours before and after the desired operation end time tb as a reference.

Then, time shift calculation unit 14 calculates operation period Tx in which an electricity charge charged when home electric appliance 20 is operated within time shift period Tz is not more than a predetermined value based on the desired time information, the operation period information, the electric power information, and electric power rate information (electric power rate Y(t)), and calculates the operation start time based on operation period Tx.

Time shift calculation unit 14 calculates electricity charge, which is charged when home electric appliance 20 is operated, by using following formula (1). That is to say, time shift calculation unit 14 can calculate the electricity charge to be charged by integrating a value, which is obtained by multiplying power rate Y(t) of each time zone by electric power P(t) required for home electric appliance 20 to be operated, with an operation period from operation start time t1 to operation end time t2 within the time shift period.

[Math. 1]

$$\text{electricity charge} = \int_{t1}^{t2} \{Y(t) \bullet P(t)\} dt$$

Note here that electric power P(t) may be determined by factors other than time, for example, an electricity rate is determined by peak electric power during a specified period. Furthermore, when a plurality of operation periods Tx picked out in which electricity charge is the lowest, time shift calculation unit 14 selects operation period Tx having operation end time that is the nearest to the desired operation end time among the plurality of operation periods Tx.

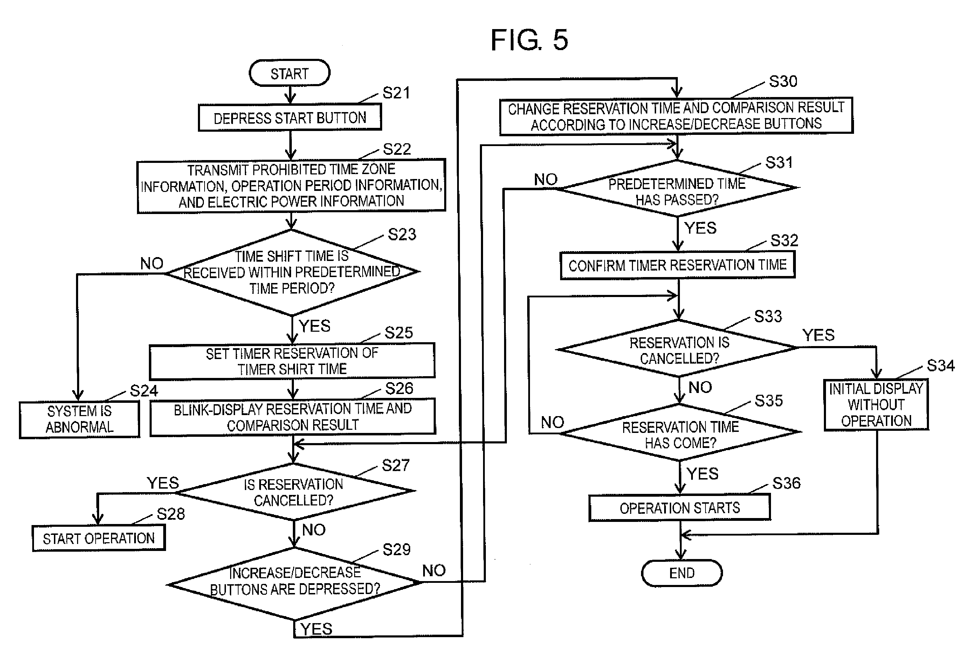

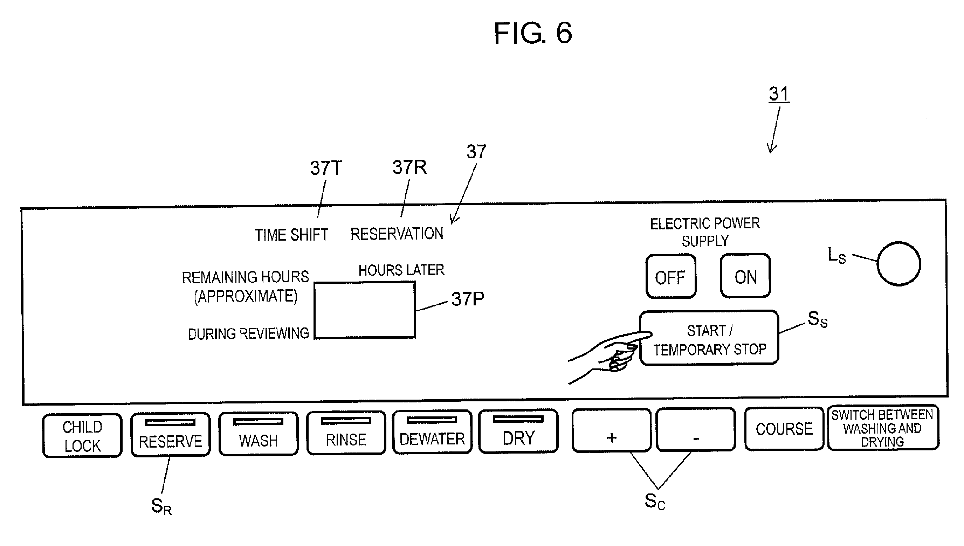

FIG. 5 is a flowchart for illustrating an operation of the home electric appliance in accordance with the first exemplary embodiment of the present invention. FIG. 6 is a view for illustrating one example of an input operation unit of the home electric appliance in accordance with the first exemplary embodiment of the present invention. FIG. 6 shows a state in which a user depresses start button Ss as one example of input operation unit 31.

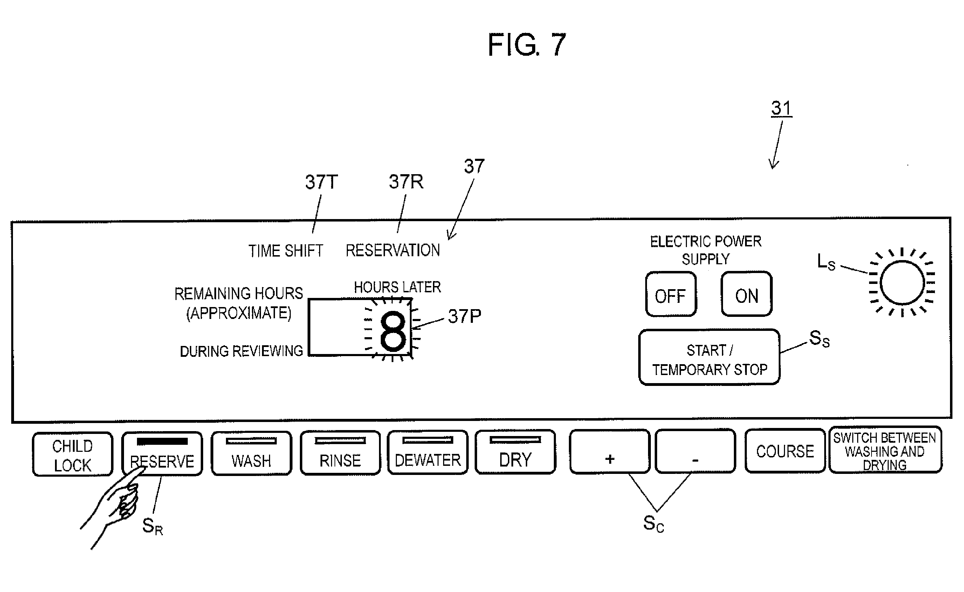

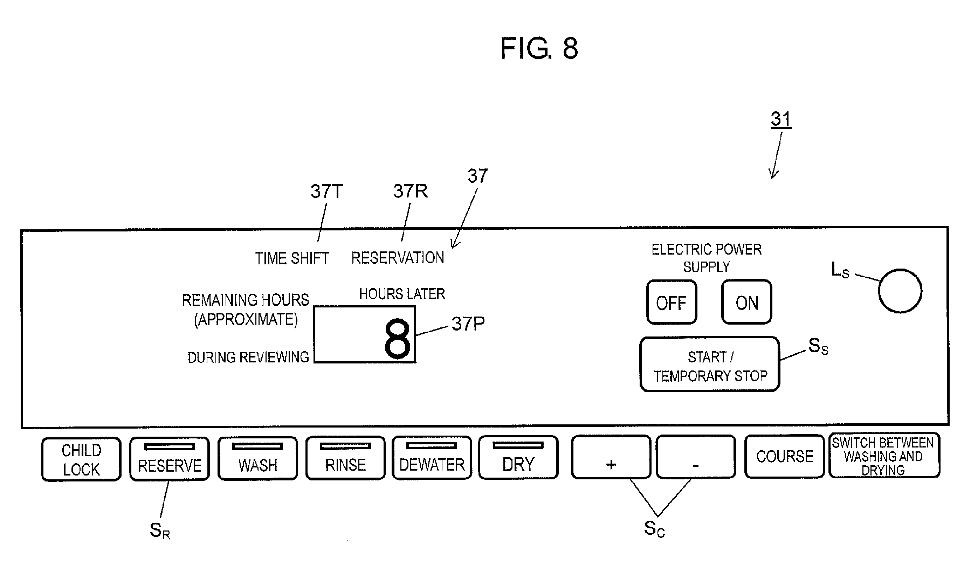

FIG. 7 is a view showing another example of the input operation unit of the home electric appliance in accordance with the first exemplary embodiment of the present invention. FIG. 7 shows a state in which timer reservation time and LED Ls as one example of display unit 37 are blink-displayed, as another example of input operation unit 31. FIG. 8 is a view for illustrating still another example of the input operation unit of the home electric appliance in accordance with the first exemplary embodiment of the present invention. FIG. 8 shows a state in which timer reservation time and LED Ls are lighting-displayed, as still another example of input operation unit 31.

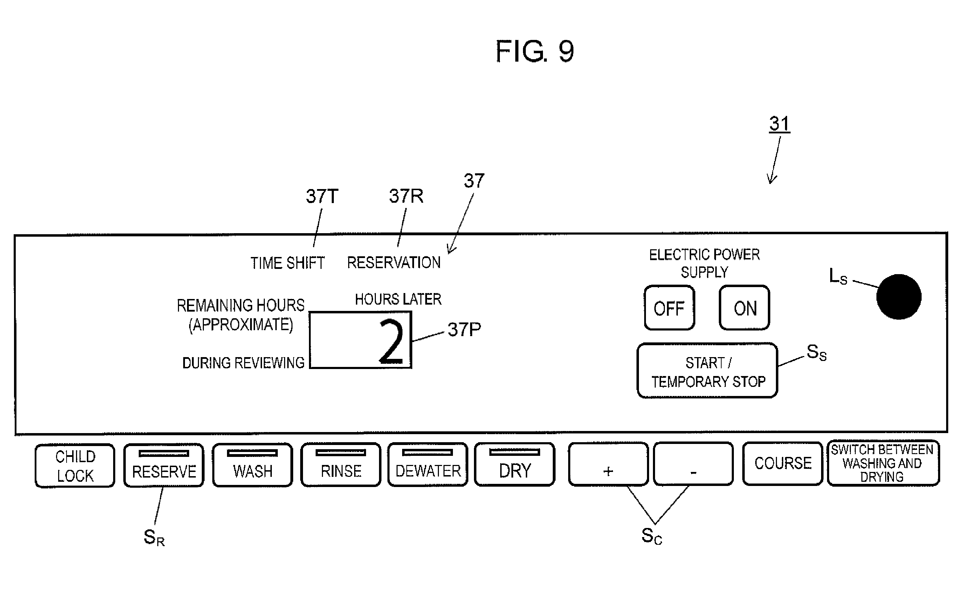

FIGs. 9, 10 and 11 are illustration views each showing a further display example of the display unit of the home electric appliance in accordance with the first exemplary embodiment of the present invention. FIGs. 9, 10 and 11 show states in which each of the increase/decrease buttons (+ button and - button, and the like) $S_C$ is depressed while the state of LED Ls is viewed, and timer reservation time is adjusted as other examples of input operation unit 31 and LED Ls.

Firstly, in step S21, a user sets operation condition by operating input operation unit 31 of home electric appliance 20 and then depresses start button Ss (FIG. 6). Then, transmitting unit 32 transmits operation period information, electric power information, and operation prohibited time zone information of home electric appliance 20, corresponding to the selected operation condition to receiving unit 11 of appliance control device 10 (step S22).

Then, when operation start time (time shift time) is not received from appliance control device 10 within a predetermined time (NO in step S23), it is determined that a system is abnormal (step S24). On the other hand, when operation start time is received from appliance control device 10 within a predetermined time (YES in step S23), operation control unit 34 sets the operation start time as timer reservation time based on the received operation start time (step S25). Then, the operation start time set by operation control unit 34 is blink-displayed as timer reservation time on display panel 37P of display unit 37. Furthermore, a comparison result by comparison evaluation unit 35 is blink-displayed on display unit 37 as a display of LED Ls (step S26).

In this case, as shown in FIG. 7, "8" indicating the timer reservation time (8 hours later) is not lighting-displayed but blink-displayed. Thus, a user can recognize that it is not reserved time instructed by his/her input operation but operation start time suitable for operation of home electric appliance 20, which is derived as a result of calculation at appliance control device 10 side.

Furthermore, as one example of the display result of LED Ls, when luminescent color of LED Ls is red, it is shown that an electricity charge is high; when the color is yellow, it is shown that the electricity charge is regular-priced; and when the color is green, it is shown that the electricity charge is low. In this way, by displaying the changing luminescent colors of LED Ls, a user can objectively evaluate electricity charge at the time of operation start time by the time shift within the timer reservation time set by the user.

In step S26, when an instruction for cancellation of the timer reservation is input by an operation of input operation unit 31 within a predetermined time after the above-mentioned timer reservation time is displayed on display unit 37 (YES in step S27), operation control unit 34 controls such that home electric appliance 20 is operated immediately (step S28).

Furthermore, after the above-mentioned timer reservation time and a comparison result by comparison evaluation unit 35 are displayed on display unit 37 in step S26, it is determined whether or not increase/decrease buttons (+ button and - button and the like) $S_C$ for adjusting the timer reservation time are depressed by an operation of input operation unit 31 as shown in FIG. 9 within a predetermined time (step S29). Herein, when any of increase/decrease buttons $S_C$ is depressed (YES in step S29), the display of the timer reservation time (two hours later) and an LED display (dark color) showing high electricity charge are changed according to the depressing of increase/decrease buttons $S_C$ (step S30).

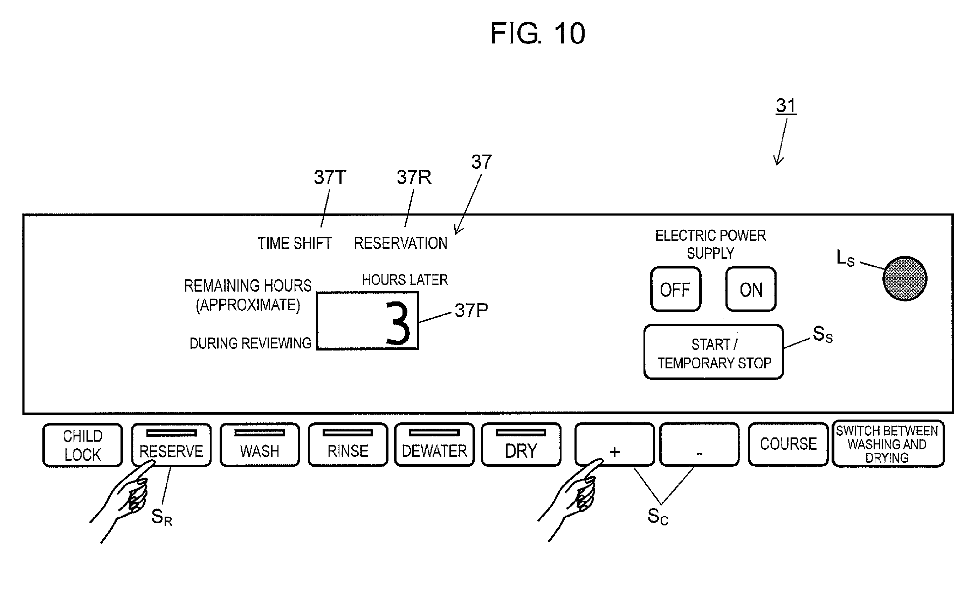

In FIG. 10, a user depresses the + button of increase/decrease buttons $S_C$ so as to change the timer reservation time from "two hours later" to "three hours later." In this case, the color of the LED display becomes somewhat darker color, showing that the electricity charge is standard, that is, not high and not low.

In this way, within a predetermined time after the timer reservation time (two hours later) is displayed on display panel 37P of display unit 37 and before an instruction for cancelling the timer reservation is input, when a user operates increase/decrease buttons $S_C$ (time adjusting buttons) of input operation unit 31, operation control unit 34 can increase or decrease the timer reservation time by the time shift calculation result received from appliance control device 10.

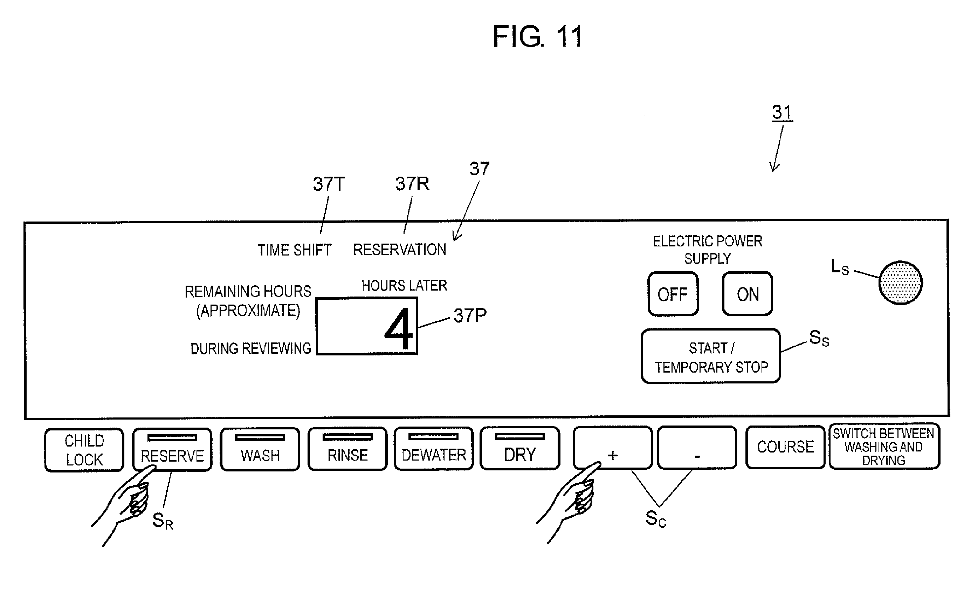

Similarly, in FIG. 11, a user depresses the + button of increase/decrease buttons $S_C$ so as to change the timer reservation time from "three hours later" to "four hours later." In this case, the color of the LED display becomes light color, showing that the electricity charge is low. In this way, since a unit of increase/decrease of increase/decrease buttons $S_C$ and a unit of time in which the display method of display unit 37 is changed are matched to each other, change of the electricity charge according to the change of the timer reservation time is recognized more clearly.

The following is a description of a reference value as a reference for determining whether the electricity charge of home electric appliance 20 is high or low in the operation time set at the input timer reservation time. The reference value is stored in storage unit 36 and used as a reference for showing whether or not the electric power rate acquired by electric power rate information acquiring unit 13 is low. A method for setting the reference includes two methods, that is, an absolute method and a relative method.

An example of the absolute method for setting a reference includes a method of allowing a user to specifically input electricity charge which the user thinks high and low. This method allows a user to take time to input a reference value, but electricity charge can be evaluated by the reference value set by the user. Therefore, results that are more matched to a sense of proper price of electricity charge which is thought by the user can be displayed. Herein, electricity charge as the reference value that is previously input by a user may be a previously designated range. Furthermore, a plurality of the previously designated ranges may be set. Thus, reference values that are matched to the user can be set more easily.

Furthermore, another example of the absolute method for setting a reference includes a method using an electric power rate when timer reservation time is input, for example, 22 yen/kWh, as a reference value of default.

Furthermore, a relative method for setting a reference includes a method using a change depending the time of an electric power rate shown in FIG. 4. Since this method can omit user's taking time to input of a reference value, the method can set a reference value more easily. Furthermore, it can clearly show a user that the electric power rate at the current time is relatively high or low.

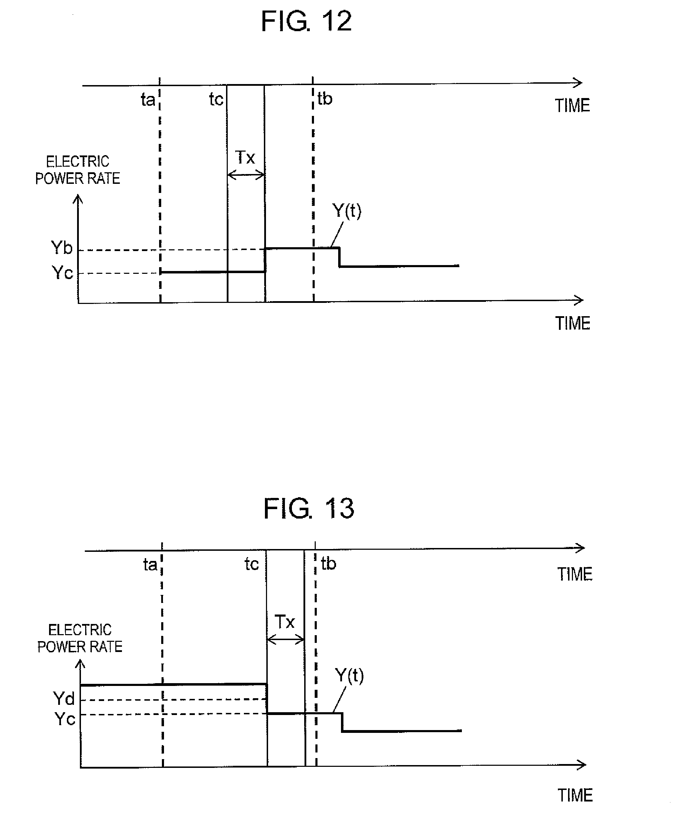

Next, one example of the relative method for setting a reference is described with reference to FIGs. 12 and 13. FIG. 12 is another schematic view for illustrating a time shift period and an operation period in accordance with the first exemplary embodiment of the present invention.

FIG. 12 shows the change of the electric power rate in which the abscissa represents time and the ordinate represents an electric power rate. FIG. 12 also shows current time ta, desired operation end time tb, operation start time tc that is start time of operation period Tx, operation period Tx, electric power rate Yc at operation start time tc, and electric power rate Yb at desired operation end time tb.

As shown in FIG. 12, when electric power rate Yc at operation start time tc is compared with electric power rate Yb at desired operation end time tb desired by a user as a reference, it can be shown whether electric power rate until desired operation end time tb desired by a user is low.

In the above description, electric power rate Yc at operation start time Tc is compared with electric power rate Yb as a reference, but may be compared with an average of electric power rates during operation period Tx. It is necessary only to show that the electric power rate until desired operation end time tb desired by a user is low.

Furthermore, another example of the relative method for setting a reference is described with reference to FIG. 13. FIG. 13 is another schematic view for illustrating the time shift period and the operation period in accordance with the first exemplary embodiment of the present invention.

Similar to FIG. 12, FIG. 13 shows a change of the electric power rate in which the abscissa represents time and the ordinate represents the electric power rate. FIG. 13 also shows current time ta, desired operation end time tb, operation start time tc that is start time of operation period Tx, operation period Tx, electric power rate Yc at operation start time tc, and average Yd of electric power rates predetermined time before operation start time tc. In FIG. 13, predetermined time is 24 hours.

As shown in FIG. 13, when electric power rate Yc in operation start time tc is compared with average Yd as a reference of electric power rates for 24 hours until operation start time tc, comparison with the electric power rate to this time can be carried out. Thus, it can be shown that the electricity charge is low more clearly.

With the configuration mentioned above, by a simple operation of depressing increase/decrease buttons $S_C$, a user can change to the desired operation start time from an optimum operation start time of home electric appliance 20 (operation start time of the operation period in which the electricity charge is the lowest) which is displayed as a calculation result of time shift calculation unit 14.

Thus, for example, in a case where the operation is started two hours later, drying of laundry cannot be completed within the time, the operation start time can be made to be earlier by depressing the - button. Furthermore, for example, when the electricity charge is sufficiently low if the operation is started eight hours later, reservation start time can be made to be later by depressing the + button.

Then, when a predetermined time has passed after an input by increase/decrease buttons Sc (time adjusting buttons) is possible, or when an input is not carried out during a predetermined time after the input by increase/decrease buttons Sc (time adjusting buttons) is carried out (YES in step S31), operation control unit 34 confirms the timer reservation time (step S32). Thus, the display of the timer reservation time is switched from blink display shown in FIG. 7 to lighting display shown in FIG. 8. Herein, the confirmed timer reservation time is operation start time (time shift time) calculated at an appliance control device 10 side when adjustment by increase/decrease buttons $S_C$ is not carried out, and it is adjusted operation start time when adjustment by increase/decrease buttons $S_C$ is carried out. When the operation start time is adjusted by increase/decrease buttons Sc, information of the adjusted operation start time is transmitted from home electric appliance 20 to appliance control device 10.

After the timer reservation is confirmed in step S32, the reservation is cancelled before the reservation time comes (YES in step S33), operation control unit 34 controls such that home electric appliance 20 is not operated (step S34).

In this way, when a user operates input operation unit 31 to input an instruction for cancellation of the timer reservation after the timer reservation is confirmed until the operation start time based on the timer reservation, operation control unit 34 can control such that home electric appliance 20 does not operate. Specifically, when the user depresses reservation button $S_R$ of input operation unit 31 shown in FIG. 9, the lighting display of reservation button $S_R$ is turned off, thereby enabling the timer reservation to be cancelled.

Thus, for example, even when a user needs to go out after the reservation is confirmed and it becomes inconvenient that home electric appliance 20 is operated at the reserved time, the timer reservation can be cancelled by a simple operation of input operation unit 31, that is, an operation of depressing reservation button $S_R$. Thus, home electric appliance 20 can be controlled such that it does not work. As a result, convenience for a user using home electric appliance 20 provided with a time shift function can be further improved. A cancellation operation of the timer reservation can be easily achieved by using existing input operation panel, remote control, or the like, provided to home electric appliance 20 as input operation unit 31 or display unit 37.

Furthermore, when the reservation time comes without cancellation of the reservation, that is, when the operation start time transmitted from appliance control device 10 comes (YES in step S35), operation control unit 34 controls home electric appliance 20 to start an operation (step S36).

Furthermore, optimum timer reservation setting by a user is described with reference to FIGs. 9, 10, and 11. FIG. 9 shows that a color of the display of LED Ls becomes a dark color when the timer reservation time is two hours later. This shows that the electricity charge is high as the comparison results of comparison evaluation unit 35 when the timer reservation time is two hours later. Furthermore, FIG. 10 shows that a color of the display of LED Ls becomes somewhat lighter color when the timer reservation time is three hours later. This shows that the electricity charge is standard as the comparison results of comparison evaluation unit 35 when the timer reservation time is three hours later. Furthermore, FIG. 11 shows that the color of the display of LED Ls becomes a light color when the timer reservation time is four hours later. This shows that the electricity charge is low when the timer reservation time is four hours later.

As the relation between the timer reservation time and the display of the LED Ls is shown in FIGs. 9, 10, and 11, a user can adjust the timer reservation time while the user depresses increase/decrease buttons Sc many times, so that the user can check luminescent colors of LED corresponding to the time. Therefore, setting capable of achieving satisfaction of a user and a low electricity rate can be carried out simply and intuitively. In this way, in this exemplary embodiment, electricity charge with respect to timer reservation time can be shown to the user more clearly.

A user wishes for using home electric appliance 20 as soon as possible with convenience considered. On the other hand, however, from the viewpoint of economical efficiency, the user desires low electricity charge. In other words, the user sets timer reservation time with balance between the convenience and the economical efficiency considered. Furthermore, the balance between the convenience and the economical efficiency are different depending upon users. Some users give priority on convenience and some users give priority on economical efficiency.

Then, by operating and displaying both the timer reservation time and LED Ls shown in FIGs. 9, 10, and 11 at the same time, timer reservation time suitable for a user can be set.

Note here that FIG. 1 may have a configuration in which appliance control device 10 and home electric appliance 20 are integrated with each other. Home electric appliances 30 and 40 can be controlled from home electric appliance 20 including appliance control device 10. Also FIG. 2 may have a configuration in which appliance control device 10 and home electric appliance 20 are integrated with each other.

Furthermore, in this exemplary embodiment, home electric appliances used in households are described as an example of the home electric appliance. However, the home electric appliance is not limited to this, and the same effect can be obtained in home electric appliances used in offices, factories, facilities, and the like.

Furthermore, the present invention may be distributed as a program by storage media or communication media, and it may be executed by installing it on a server or personal computer, microcomputer of a home electric appliance.

As mentioned above, a home electric appliance of the present invention includes: an input operation unit for inputting desired time information indicating any of a desired operation start time and a desired operation end time; a receiving unit for receiving a time shift calculation result including any of an operation start time and an operation end time and an electricity charge of which an amount becomes not more than a predetermined value when the appliance is operated according to the operation start time or the operation end time within a predetermined period determined by desired time information; a storage unit for storing a reference value with which the time shift calculation result is evaluated; a comparison evaluation unit for carrying out comparison processing which compares the time shift calculation result with the reference value stored in the storage unit; an operation control unit for controlling operation of the appliance based on the time shift calculation result; and a display unit for displaying information regarding the operation. The display unit changes a display method according to a comparison result by the comparison evaluation unit.

This configuration permits simple and intuitive operation setting of a home electric appliance, which can achieve satisfaction of a user and low electricity rates. Furthermore, a user can understand what time an operation is finished by viewing the display unit, and convenience can be improved. In addition, since an effect of the time shift is displayed from the objective viewpoint according to the reference value set by the user, the user can easily determine that it is an optimum time. Thus, convenience can be further improved.

In addition, a display method can be changed according to the comparison result by the comparison evaluation unit during input of the desired time information. Therefore, both the user and the home electric appliance can think and determine optimum operation start time or operation end time of the home electric appliance. Thus, convenience can be more improved.

Furthermore, in the home electric appliance of the present invention, the comparison evaluation unit may carry out comparison processing every time when the desired time information input by the input operation unit changes. With this configuration, since it is possible to view a pair of a comparison result showing the desired time information and an effect of the time shift, a user can set optimum desired time. Thus, convenience can be further improved.

Furthermore, in the home electric appliance of the present invention, the comparison evaluation unit may carry out comparison processing when no input operation is made for a predetermined time after the desired time information is input by the input operation unit.

This configuration does not confuse a user by showing a comparison result during user's input operation, and does not allow a user to take time to depress a determination button. Thus, convenience can be further improved.

Furthermore, in the home electric appliance of the present invention, the reference value stored in the storage unit may have a range designated in advance by a user. With this configuration, the reference value matched to each user can be set, and, therefore, convenience can be further improved.

Furthermore, in the home electric appliance of the present invention, the range designated in advance is one of a plurality of ranges settable by the user. With this configuration, since the plurality of ranges can be set, sense of proper price of electricity rates can be understood more reliably. Therefore, convenience can be further improved.

Furthermore, in the home electric appliance of the present invention, the reference value stored in the storage unit may be an electricity charge at a desired time by the desired time information. This configuration can show more clearly that the electric power rate is low in the desired operation start time or the desired operation end time desired by a user.

Furthermore, in the home electric appliance of the present invention, the reference value stored in the storage unit may be an average value of electric power rate calculated for a predetermined time period from the operation start time based on the electric power rate information indicating the electric power rate that changes every hour.

Since this configuration carries out comparison by using historical electricity rates experienced by a user as a reference, each user can actually feel whether or not the electricity rate at the current time is economical. Therefore, convenience can be further improved.

Furthermore, in the home electric appliance of the present invention, an input operation unit may be a button for instructing an increase or decrease of numeric value, and an increase/decrease adjusting unit for matching a unit of increase/decrease of the button and a unit of time in which a display method of the display unit is changed to each other may be provided. This configuration can set desired time more finely, so that optimum desired time can be found, and convenience can be further improved.

Furthermore, in the home electric appliance of the present invention, the display unit may change displayed colors according to a comparison result by the comparison evaluation unit. With this configuration, since displayed colors are used to appeal a user visually, convenience can be improved.

## INDUSTRIAL APPLICABILITY

A home electric appliance according to the present invention is useful for home electric appliances in which operation start time or operation end time is controlled while satisfaction of a user and low electricity rate are achieved.

## REFERENCE MARKS IN THE DRAWINGS

| | |
|---|---|
| 100 | appliance control system |
| 10 | appliance control device |
| 11 | receiving unit |
| 12 | time shift period setting unit |
| 13 | electric power rate information acquiring unit |
| 14 | time shift calculation unit |
| 15 | transmitting unit |

| 20, 30, 40 | home electric appliance |
| 31 | input operation unit |
| 32 | transmitting unit |
| 33 | receiving unit |
| 34 | operation control unit |
| 35 | comparison evaluation unit |
| 36 | storage unit |
| 37 | display unit |

**Claims**

1. A home electric appliance comprising:

an input operation unit for inputting desired time information indicating any of a desired operation start time and a desired operation end time;
a receiving unit for receiving a time shift calculation result including any of an operation start time and an operation end time, and an electricity charge of which an amount becomes not more than a predetermined value when the appliance is operated according to the operation start time or the operation end time within a predetermined period determined by the desired time information;
a storage unit for storing a reference value with which the time shift calculation result is evaluated;
a comparison evaluation unit for carrying out comparison processing which compares the time shift calculation result with the reference value stored in the storage unit;
an operation control unit for controlling operation of the appliance based on the time shift calculation result; and
a display unit for displaying information regarding the operation,
wherein the display unit changes a display method according to a comparison result by the comparison evaluation unit.

2. The home electric appliance of claim 1, wherein the comparison evaluation unit carries out the comparison processing every time when the desired time information input by the input operation unit changes.

3. The home electric appliance of claim 2, wherein the comparison evaluation unit carries out the comparison processing when no input operation is made for a predetermined time after the desired time information is input by the input operation unit.

4. The home electric appliance of claim 1, wherein the reference value stored in the storage unit has a range designated in advance by a user.

5. The home electric appliance of claim 4, wherein the range designated in advance is one of a plurality of ranges settable by the user.

6. The home electric appliance of claim 1, wherein the reference value stored in the storage unit is an electricity charge at a desired time by the desired time information.

7. The home electric appliance of claim 1, wherein the reference value stored in the storage unit is an average value of electric power rate calculated for a predetermined time period from the operation start time based on electric power rate information indicating the electric power rate that changes every hour.

8. The home electric appliance of claim 1, wherein the input operation unit is a button for instructing an increase or decrease of a numeric value, and
a unit of increase/decrease of the button and a unit of time in which the display method of the display unit is changed are matched to each other.

9. The home electric appliance of claim 1, wherein the display unit changes displayed colors according to the comparison result by the comparison evaluation unit.

# FIG. 1

100

10

20

30

40

# FIG. 2

# FIG. 3

APPLIANCE CONTROL DEVICE | HOME ELECTRIC APPLIANCE

START

S1
RECEIVE INPUT OF DESIRED TIME INFORMATION, OPERATION PERIOD INFORMATION, AND ELECTRIC POWER INFORMATION

S3
RECEIVE DESIRED TIME INFORMATION, OPERATION PERIOD INFORMATION, AND ELECTRIC POWER INFORMATION

S2
TRANSMIT DESIRED TIME INFORMATION, OPERATION PERIOD INFORMATION, AND ELECTRIC POWER INFORMATION

S4
SET TIME SHIFT PERIOD

S5
ACQUIRE ELECTRIC POWER RATE INFORMATION

S6
CALCULATE OPERATION START TIME

S7
TRANSMIT OPERATION START TIME

S8
RECEIVE OPERATION START TIME

S9
STORE OPERATION START TIME

S10
OPERATION START TIME?　NO

YES

S11
OPERATE HOME ELECTRIC APPLIANCE

END

# FIG. 4

# FIG. 5

START

S21 — DEPRESS START BUTTON

S22 — TRANSMIT PROHIBITED TIME ZONE INFORMATION, OPERATION PERIOD INFORMATION, AND ELECTRIC POWER INFORMATION

S23 — TIME SHIFT TIME IS RECEIVED WITHIN PREDETERMINED TIME PERIOD?

NO → S24 — SYSTEM IS ABNORMAL

YES

S25 — SET TIMER RESERVATION OF TIMER SHIRT TIME

S26 — BLINK-DISPLAY RESERVATION TIME AND COMPARISON RESULT

S27 — IS RESERVATION CANCELLED?

YES → S28 — START OPERATION

NO

S29 — INCREASE/DECREASE BUTTONS ARE DEPRESSED?

NO

YES

S30 — CHANGE RESERVATION TIME AND COMPARISON RESULT ACCORDING TO INCREASE/DECREASE BUTTONS

S31 — PREDETERMINED TIME HAS PASSED?

NO

YES

S32 — CONFIRM TIMER RESERVATION TIME

S33 — RESERVATION IS CANCELLED?

YES → S34 — INITIAL DISPLAY WITHOUT OPERATION

NO

S35 — RESERVATION TIME HAS COME?

NO

YES

S36 — OPERATION STARTS

END

EP 2 731 219 A1

# FIG. 6

# FIG. 7

TIME SHIFT 37T

RESERVATION 37R

37

REMAINING HOURS (APPROXIMATE)

HOURS LATER

DURING REVIEWING

8 — 37P

ELECTRIC POWER SUPPLY

OFF ON

$L_S$

START / TEMPORARY STOP — $S_S$

31

CHILD LOCK | RESERVE | WASH | RINSE | DEWATER | DRY | + | − | COURSE | SWITCH BETWEEN WASHING AND DRYING

$S_R$

$S_C$

EP 2 731 219 A1

19

# FIG. 8

EP 2 731 219 A1

# FIG. 9

EP 2 731 219 A1

# FIG. 10

EP 2 731 219 A1

# FIG. 11

EP 2 731 219 A1

# FIG. 12

# FIG. 13

| **INTERNATIONAL SEARCH REPORT** | International application No. |
|---|---|
| | PCT/JP2012/004325 |

**A. CLASSIFICATION OF SUBJECT MATTER**
*H02J3/00(2006.01)i*

According to International Patent Classification (IPC) or to both national classification and IPC

**B. FIELDS SEARCHED**

Minimum documentation searched (classification system followed by classification symbols)
H02J3/00

Documentation searched other than minimum documentation to the extent that such documents are included in the fields searched

| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-304595 A  (Hitachi, Ltd.),<br>02 November 2006 (02.11.2006),<br>paragraphs [0031] to [0040]; fig. 4 to 6<br>(Family: none) | 1-9 |
| A | JP 2008-289276 A  (Nippon Telegraph and Telephone Corp.),<br>27 November 2008 (27.11.2008),<br>paragraphs [0039] to [0049]; fig. 1<br>(Family: none) | 1-9 |

☐ Further documents are listed in the continuation of Box C.　　☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 September, 2012 (24.09.12) | 02 October, 2012 (02.10.12) |

| Name and mailing address of the ISA/<br>Japanese Patent Office | Authorized officer |
|---|---|
| Facsimile No. | Telephone No. |

Form PCT/ISA/210 (second sheet) (July 2009)

**EP 2 731 219 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007124793 A

- JP 2008067473 A